# EUROPEAN PATENT APPLICATION

(11) **EP 1 130 667 A1**
(43) Date of publication of application: **05.09.2001**
(21) Application number: 00951953.9
(22) Date of filing: 11.08.2000
(51) Int. Cl.: H01M 4/58, H01M 4/04, H01M 10/40, B01F 7/16, B01F 7/26, H01G 9/058, H01G 13/00

(54) **PRESS-SLIDE KNEADER, METHOD FOR COATING WITH IONIC-CONDUCTIVE POLYMER, AND POWDERY MATERIAL**

(30) Priority: 12.08.1999 JP 26250199
(71) Applicant: Nisshinbo Industries, Inc., Chuo-ku, Tokyo 103-8650 (JP)
(72) Inventor: SATO, Takaya;, Nisshinbo Industries, Inc., Chiba-shi, Chiba 267-0056 (JP); SHIMIZU, Tatsuo, CI Techno-Sales Inc., Tokyo 102-0094 (JP)
(74) Representative: Sajda, Wolf E., Dipl.-Phys.
(86) International application number: JP0005397
(87) International publication number: WO0113447

(57) **Abstract**

A press-sliding mixer, wherein a mixture of the ion-conducting polymer or ion-conducting polymer raw material 121 and the powdered substance 11 is processed so that the powdered substance 11 is coated by the ion-conducting polymer 12, a coating method and a powdered substance are further proposed to provide a device and a coating method wherein a powdered substance is efficiently coated by the ion-conducting polymer, and a coated powdered substance.

## Description

### Field of the Invention

This invention relates to a coating of an ion-conducting polymer on an electrode structure for an electrical component such as a primary and secondary cell and an electric double layer capacitor.

### Background of the Invention

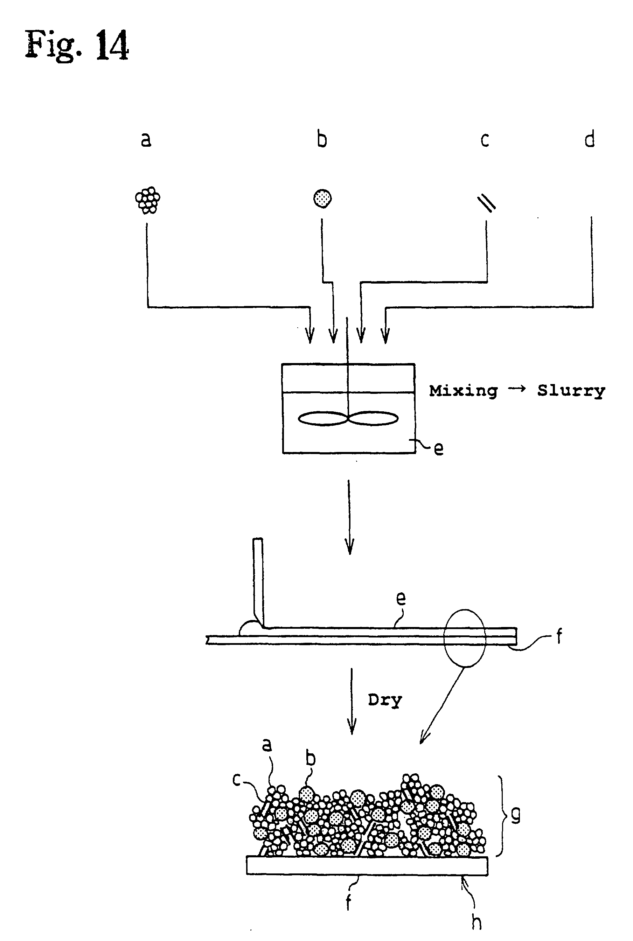

In the prior art, in a lithium ion battery, a positive electrode h is manufactured by mixing a mixture e of a powdered electrode active substance a comprising LiCoO₂, powdered electrically-conducting carbon b, a binder polymer c and a solvent d into a slurry, and applying it to a current-collecting member f to form a compound film g, as shown in Fig. 14. The compound film g of Fig. 14 is a partial enlargement of the mixture e on the current-collecting member f.

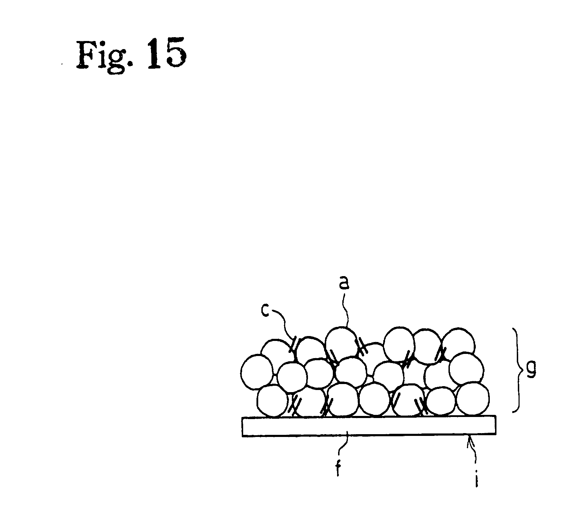

A negative electrode i is manufactured by mixing the mixture e of the powdered electrode active substance a comprising powdered graphite, the binder polymer c and the solvent d into a slurry, applying it to the current-collecting member f, and drying to form the compound film g, as shown in Fig. 15.

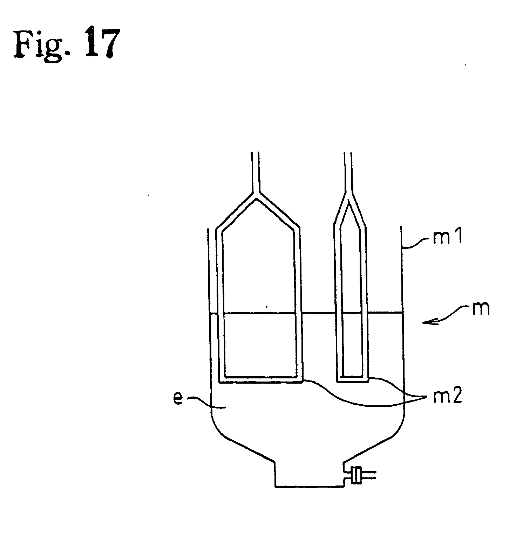

The mixing is performed for example by a planetary mixer as shown in Fig. 17. The mixture is held in a container, and a mixing blade is rotated so the mixture forms a slurry.

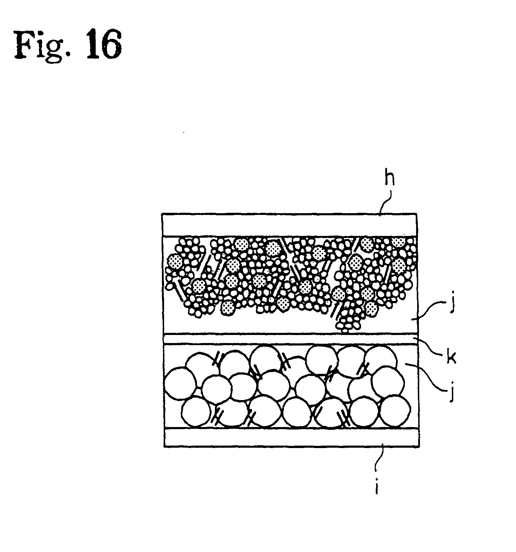

A lithium secondary cell contains an electrolyte j between the positive electrode h and negative electrode i, a separator k being disposed in the electrolyte j, as shown in Fig. 16.

However, concerning the electrode active substance a contained in the compound film g, doping/undoping of lithium ions is performed during charging and discharging through the electrolyte j which permeated the voids in the compound film j, and if the particles of the electrode active substance a are covered by the binder polymer c, lithium ions are prevented from penetrating the electrode active substance a, so battery performance declines.

Even if there are minute interstices on the surfaces of the electrode active substance particles a covered by the binder polymer c, the electrolyte j cannot penetrate them, so passage of lithium ions is blocked and the battery characteristics decline.

If the amount of the added binder polymer c is reduced in an attempt to increase the interstices on the particle surfaces of the electrode active substance a, the strength of the compound film g decreases, so cohesion between the electrode active substance a or electron-conducting assistant and the current-collecting member f gradually declines during repeated charges and discharges of the battery, and battery performance declines due to decrease of electron-conducting properties.

As a means of resolving this problem, Japanese Patent Laid-Open Hei 10-106540 discloses a method of forming the binder polymer c as a mesh. However, even if the electrode active substance a is made to adhere in a mesh-like fashion by the binder polymer c, the binder polymer c which is used is a non-ion conducting polymer, so ions cannot penetrate or move through the binder polymer c. Therefore, in this case also, penetration of lithium ions into the electrode active substance a is blocked as in the case of a prior art electrode. As a result, the battery performance declines.

In USP 5,641,590 (Japanese Patent Laid-Open Hei 9-50824), the inventors disclose a method for manufacturing electrodes wherein an ion-conducting polymer is added to the electrode instead of the prior art binder polymer c which does not have ion-conducting properties. However, in this case, the ion-conducting polymer itself has a weak adhesive force, and as it is merely added to the electrode active substance a when the compound film g is manufactured, it does not permit manufacture of a battery having satisfactory performance.

Batteries are used for various types of electrical components, and they have to satisfy stringent safety criteria with regard to fire, etc. In the case of a lithium-ion battery, oxygen is generated if the LiCoO₂ is heated to high temperature and as there is a risk of explosion or fire if a large current flows due to a short-circuit, safety is a prime consideration.

### Disclosure of the Invention

It is an object of this invention to provide a device wherein an ion-conducting polymer is efficiently coated on a powdered substance.

It is a further object of this invention to provide a method of efficiently coating an ion-conducting polymer on a powdered substance.

It is a further object of this invention to provide a powdered substance on which an ion-conducting polymer is coated.

This invention further relates to a press-sliding mixer which treats a mixture of an ion-conducting polymer or ion-conducting polymer raw material and a powdered substance so as to coat the powdered substance with the ion-conducting polymer, the mixer comprising a container having a bottom surface for containing the mixture and a main blade which displaces relative to the bottom surface, the mixture being press-slid between the bottom surface and the main blade, a coating method wherein a mixture of an ion-conducting polymer or ion-conducting polymer raw material and powdered substance is press-slid so as to coat the ion-conducting polymer or ion-conducting polymer raw material on a powdered substance, a powdered substance coated with an ion-conducting polymer obtained by press-sliding a mixture of an ion-conducting polymer or ion-conducting polymer raw material and a powdered substance, a powdered substance formed by coating a powdered electrode active substance, used as an electrode structure for secondary cells, with an ion-conducting polymer, and a powdered substance formed by coating a powdered electrode active substance, used as an electrode structure for an electric double layer capacitor.

### Brief Description of the Drawings

Fig. 1 is a diagram when coating a powdered active substance with an ion-conducting polymer.

Fig. 2 is a descriptive diagram of a pressure-sliding mixer.

Fig. 3 is a schematic view of the press-sliding mixer wherein the bottom surface of a container is flat.

Fig. 4 is another schematic view of the press-sliding mixer.

Fig. 5 is a diagram showing the manufacture of an electrode structure comprising an electrode active substance which supplies ions.

Fig. 6 is a diagram of an electrode structure comprising an electrically conducting substance wherein electricity moves between ions.

Fig. 7 is a schematic view of a secondary cell.

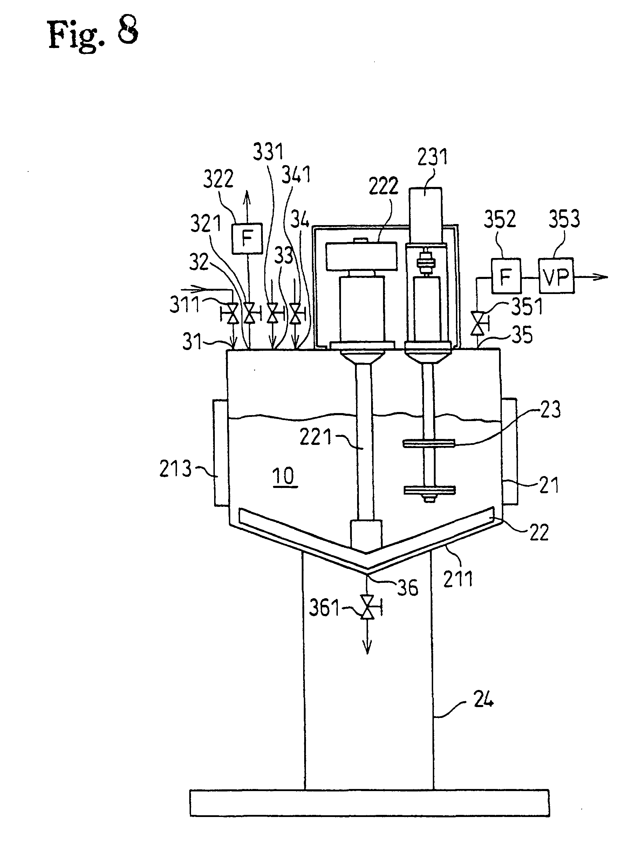

Fig. 8 is a front view of the press-sliding mixer.

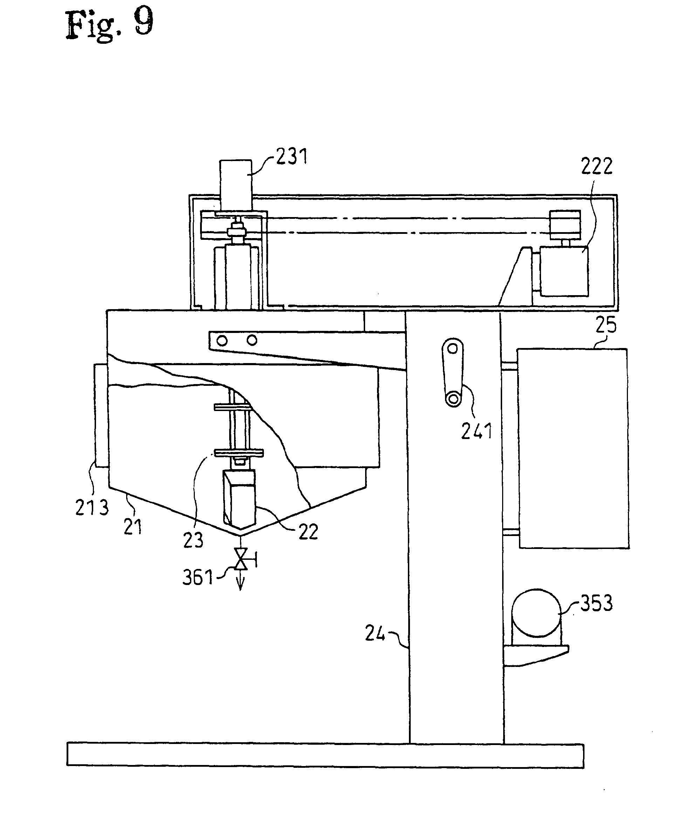

Fig. 9 is a lateral view of the press-sliding mixer.

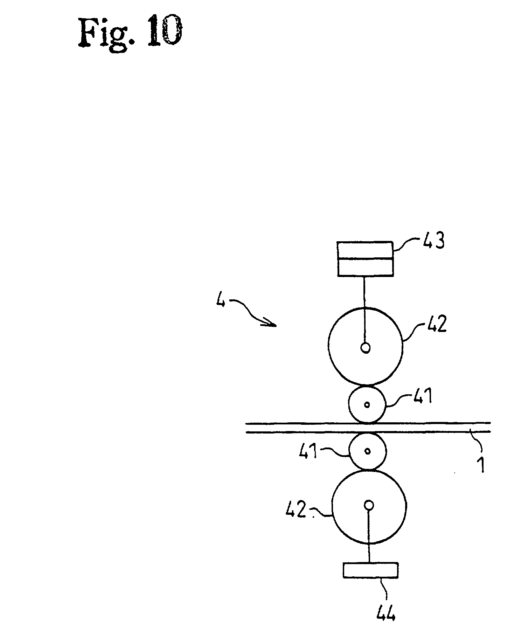

Fig. 10 is a descriptive diagram of a cohesion device.

Fig. 11 is an electron micrograph of LiCoO₂ which has not received any processing.

Fig. 12 is an electron micrograph of a positive electrode structure obtained in a third embodiment.

Fig. 13 is a photograph of a secondary electronic image of the positive electrode structure obtained in the third embodiment.

Fig. 14 is a diagram showing the manufacture of an electrode structure comprising an electrode active substance which supplies ions according to the prior art.

Fig. 15 is a diagram of an electrode structure comprising an electrically conducting substance wherein electricity moves between ions according to the prior art.

Fig. 16 is a schematic view of a secondary cell according to the prior art.

Fig. 17 is a front view of the press-sliding mixer.

This invention will now be described in more detail referring to the drawings.

### (a) Press-sliding mixer

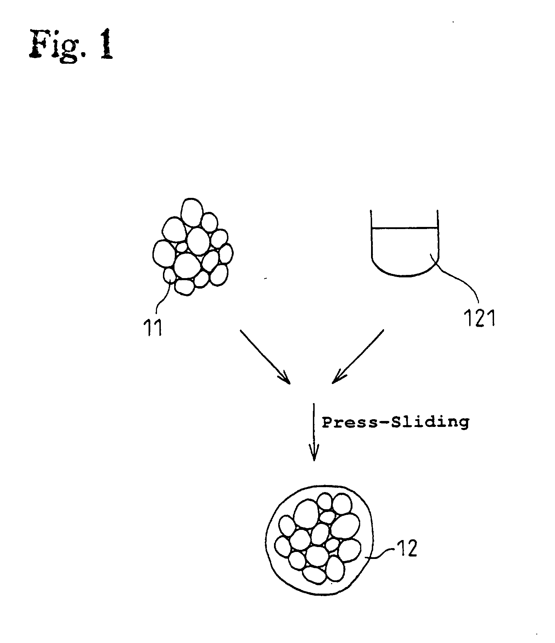

As is shown in Fig. 1, a press-sliding mixer is a device which press-slides mixtures of the ion-conducting polymer or its raw material 121 with the powdered substance 11 so as to coat the ion-conducting polymer 12 on the powdered substance 11.

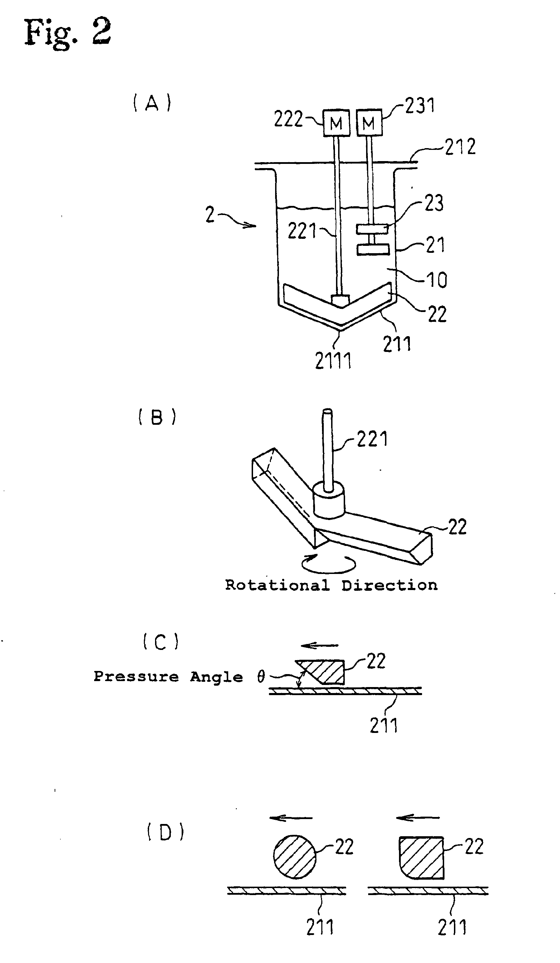

The press-sliding mixer is shown, for example, in Fig. 2. The mixture 10 of the ion-conducting polymer 12 or its raw material with the powdered substance 11, or the mixture 10 comprising this mixture and a solvent or the like, is introduced into a container 21, and the main blade 22 is rotated. There is a gap between a base 211 of the container 21 and a bottom surface of the main blade 22. When the main blade 22 is rotated, part of the mixture 10 enters the space between the base 211 of the container and the main blade 22, is subjected to press-sliding, and is kneaded. This process is repeated so that the ion-conducting polymer 12 or its raw material coats the powdered substance 11.

A press-sliding mixer 2 may if necessary be provided with a dispersion blade 23 in the container 21. The dispersion blade 23 is rotated at high speed to disperse the press-slid mixture 10.

### (b) Container

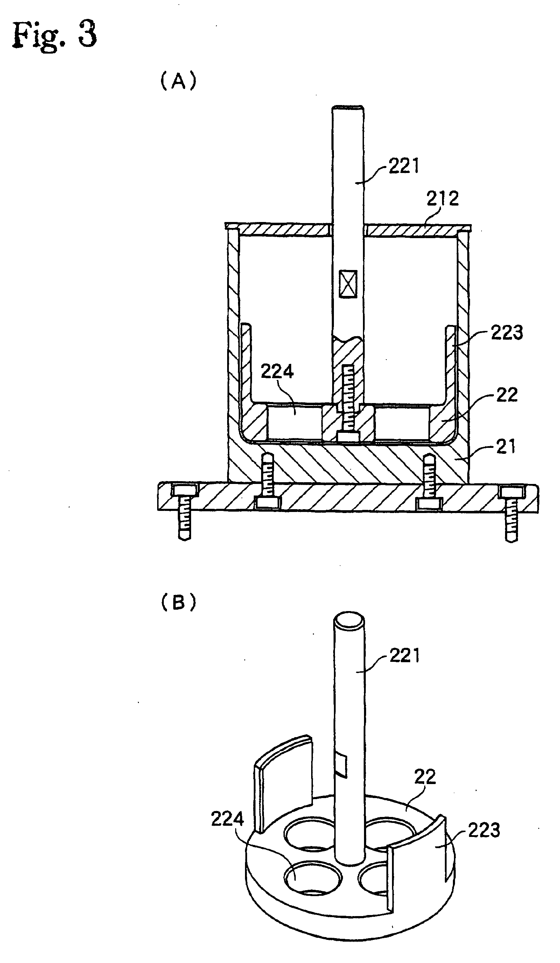

The container 21 is provided for holding the mixture 10 which is press-slid and stirred. The bottom surface of the container 21 may be such as to permit press-sliding of the mixture 10, and may be slanting as in Fig. 2 or flat as in Fig. 3. For example, if it is slanting, it has a bottom part 2111, and slants upwards from the bottom part 2111 towards the circumference. The center part may be situated in a low position, and have a slope rising towards the circumference. The bottom 211 may be formed in the shape of, for example, a grinding mortar, and the angle of the bottom part 2111 may for example be 120 degrees. The bottom 211 of the container is wear-resistant, and is formed by thermal spraying with tungsten or carbide using SUS. Plural bottom parts 2111 of this type may also be formed on the bottom surface.

### (c) Main blade

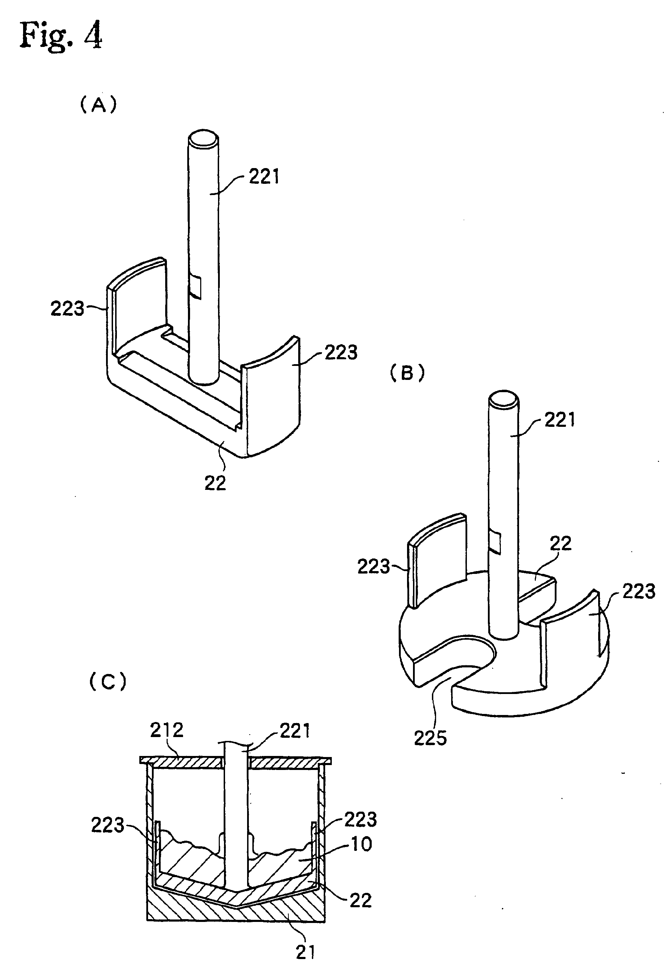

The main blade 22 functions together with the bottom surface of the container 21, serving to press-slide and stir the mixture. The main blade may have a number of different shapes. For example, in Fig. 3 or Fig. 4(B), it is disk-shaped or plate-shaped and in Fig. 4(A), it is fashioned into a wide blade so as to provide a large surface area between the bottom surface of the container and the blade adjacent to it, thereby increasing the efficiency of press-sliding. If the main blade is disk-shaped, for example, it has plural though holes 224 as is shown in Fig. 3(B) and notched groove 225 as is shown in Fig. 4(B). The mixture is transported to a gap between the bottom surface of the main blade 22 and the container via the through holes 224 or the notched grooves 225.

If the mixture adhering to the lateral surfaces of the container is removed, stirring efficiency can be increased. For this purpose, members adjacent to the lateral surfaces of the container, for example scrapers 223, may be attached to the tip of the main blade as shown in Fig. 3 or Fig. 4. The scrapers 223 rotate together with the main blade so that mixture in the vicinity of the lateral surfaces of the container is scraped off, and is transported to the gap between the bottom surface of the container and the blade surface. Hence, press-sliding is performed with high efficiency. At least, the tip of the main blade is to remove the mixture adhered to the lateral surface of the container and may be positioned away from the main blade for the independent operation.

In the main blade 22, a shaft is attached in a position corresponding to the bottom part 2111 of the container 21 as shown for example in Fig. 2(B), and if the bottom surface of the container is slanting, it curves upwards along the bottom of the container from the bottom part 2111. The main blade 22 may comprise two blades attached from the center part as shown in Fig. 2(B), or it may comprise a larger number of blades, e.g. 10 or more, depending on the amount and type of mixture. Instead of a large number of blades, a wide blade having a wide base may also be used. This allows larger surface for the press-sliding action, thereby providing more efficient press-sliding.

The main blade is rotated by a main motor 222. By permitting the blade to rotate freely in the reverse direction, more complex press-sliding control can be performed. A sympathetic flow may also be set up in the mixture due to the rotation of the main blade, so sympathetic flow is prevented by reversing the main blade during the rotation. For example, forward rotation is performed for 10 seconds, the blade is stopped, and reverse rotation is then performed for 10 seconds. By repeating this action, press-sliding control is performed. Practically identical results for press-sliding were obtained when this back and forth reverse control was performed for approximately 30 minutes, and when rotation in the same direction was performed for approximately 3 hours. There are also many other rotation methods, for example the rotation angle can continuously be suitably varied like a sine curve, etc. The rotation speed of the main blade, i.e., the number of rotations, is set low, for example to 120 rpm or less, when press-sliding is performed.

The gap between the bottom surface of the container 21 and the base surface of the main blade 22 is set as narrow as is necessary for press-sliding the mixture, for example 15 mm or less. This distance depends on the capacity of the press-sliding mixer 2 and on the shape of the main blade, etc.

For the main blade 22 having the particular shape described in Fig. 2, the surface in the motion direction (press-sliding direction) of the main blade 22 is formed so that a pressing angle *θ* relative to the bottom surface of the container 21 is an acute angle. For example, if the cross-section of the main blade 22 is a reverse trapezoid as shown in Fig. 2(C), the pressing angle is from 3 degrees to 70 degrees. The cross-section of the main blade 22 may also be circular or have a rounded corner as shown in Fig. 2(D). The material of the main blade has wear-resistant properties, and is formed for example by thermal spraying with tungsten or carbide using SUS.

If a surface in a direction opposite to the motion direction (press-sliding direction) of the main blade 22 is formed for example effectively perpendicular to or at an obtuse angle to the bottom surface, the mixture 10 can be collected around the main shaft 221 by rotating the main shaft 221 in the reverse direction.

If there are plural bottom parts 2111 on the bottom surface, the center parts of the main blade 22 are also disposed in positions of the bottom part corresponding to their number.

### (d) Press-sliding

Press-sliding is the action of sliding while pressing mixtures 10 of the ion-conducting polymer 12 or the raw material of the ion-conducting polymer 12 and the powdered substance 11 together. An external force is applied to the mixtures so that they cohere to each other and the particles rotate, and this process is performed repeatedly to obtain a press-sliding product.

In this process, a rotation is given to the powdered substance 11, if necessary. For example, the mixtures 10 are brought into mutual contact by applying an external force to the mixtures 10 between a main blade 22 and the bottom of a container, the mixtures 10 slide and rotate due to a rotation of the main blade 22, and an ion-conducting polymer or ion-conducting polymer raw material 121 is thereby coated on the powdered substance 11. This is performed repeatedly so that the ion-conducting polymer or ion-conducting polymer raw material 121 is adsorbed by the whole of the powdered substance, and the ion-conducting polymer or ion-conducting polymer raw material 121 covers the surface of the powdered substance 11.

### (e) Dispersing blade

The dispersion blade 23 is intended to disperse the mixture 10 which has been press-slid by the main blade 22. The dispersion blade 23 is disposed in a position at which the mixture 10 can be dispersed, and it rotates at a high speed such as 1000-4000 rpm. Due to this high speed rotation, the ion-conducting polymer 12 or its raw material coated on the particle surfaces of the powdered substance 11 uniformly disperses through the whole of the powdered substance. The mixture adheres on the area surrounding the main shaft 221 of the main blade 22 when in firm mixing or low clay dispersion and tends to be ununiformed mixing. The dispersion blade 23 is positioned on the main shaft 221 of the main blade 22, rotating the same from the dry mixing stage to prevent the adhesion on the area surrounding the main shaft 221.

### (f) Powdered electrode active substance

The powdered substance 11 has a small particle size, and is a powdered electrode active substance or a powdered electrically-conducting substance used, for example, in secondary cell electrodes or a powdered large surface material with a large surface area used in an electric double layer capacitor..

The powdered electrode active substance may be a material which permits insertion and separation of ions, or a π-conjugated electrically-conducting polymer material.

There is no particular limitation on the electrode active material used as the positive electrode in a non-aqueous electrolytic battery, but in the case of a rechargeable secondary cell, a chalcogen compound permitting insertion and separation of lithium ions or a complex chalcogen compound containing lithium may for example be used.

There is no particular limitation on the electrode active substance used as the negative electrode in a non-aqueous electrolyte battery, but a material permitting insertion and separation of lithium ions may be used such as lithium metal, lithium alloy (alloys of lithium and aluminum, lead and indium, etc.), and carbon materials.

Examples of π-conjugated conducting polymer materials are polyacetylenes, polyanilines, polypyrroles, polythiophenes, poly- p (para)-phenylenes, polycarbazoles, polyacenes and sulfur polymers.

The powdered electrically-conducting substance increases the electrical conductivity of the electrode structure, there being no particular limitation thereon, but metal powders and carbon powder may be used. As carbon powder, pyrolytic carbon such as carbon black and its graphitization products, artificial and natural scaly graphite powder, and carbon fiber and its graphitization products, are suitable. Mixtures of these carbon powders may also be used.

A powdered electrode substance with a large surface area is a powdered large surface material that may draw many ions on that surface. A preferable powdered large surface material has its specific surface area of 500m²/g or larger, more preferably 1000m²/g or larger, further more preferably 1500m²/g-3000m²/g, and its average particle diameter of 30µm or lower, more preferably 5-30µm carbon material. If the specific surface area and the average particle diameter are out of the above-specified range, and it may be difficult to secure a high electrostatic capacity and a low resistance electric double layer capacitor.

A preferable powdered large surface material especially is an activated carbon resulting from activating the carbon material such as by a steam activating treatment and a fused KOH activating treatment. The activated carbon for example may be palm shell activated carbon, a phenol activated carbon, a petroleum coke type activated carbon, and polyacenes. One of the above activated carbon types or combination of two ore more activated carbon types may be employed. Phenol activated carbon, a petroleum coke type activated carbon, and a polyacenes are preferable since they provide a larger electrostatic capacity.

### (g) Ion-conducting polymer

The ion-conducting polymer is a polymer which can dissolve at least the lithium salts described hereafter at a concentration of at least 0.1M (moles/l), the polymer containing the lithium salt at a concentration of at least 0.1 M having an electrical conductivity of 10⁻⁸ S (siemens)/cm at room temperature. It is to be particularly preferred that the ion-conducting polymer dissolves at least lithium salts to a concentration of 0.8M-1.5M, the resulting polymer solution having an electrical conductivity of 10⁻³ S/cm - 10⁻⁵ S/cm at room temperature.

The lithium salt is at least one type of lithium salt having ClO₄⁻, CF₃SO₃⁻, BF₄⁻, PF₆⁻, AsF₆⁻, SbF₆⁻, CF₃CO₂⁻ or (CF₃SO₂)₂N⁻ as anion.

The ion-conducting polymer raw material is a substance which produces the ion-conducting polymer by cross-linking, etc., when energy is supplied externally. The energy may be heat, ultraviolet light, light or electron radiation.

The following sections shows an example employing a powdered electrode active substance coated with an ion-conducting polymer.

### (a) Electrode structures

Electrode structures are used as electrodes in these electrical components such as a secondary cell and an electric double layer capacitor, and exchange electrical charges with ions or draw ions. For this purpose, they have a construction in which a powdered electrode active substance coated with an ion-conducting polymer, is made to adhere to a current-collecting member. For instance, they have a construction in which the powdered electrode active substance used for batteries or a powdered large surface material with a large surface area used for an electric double layer capacitor is made to adhere to a current-collecting member.

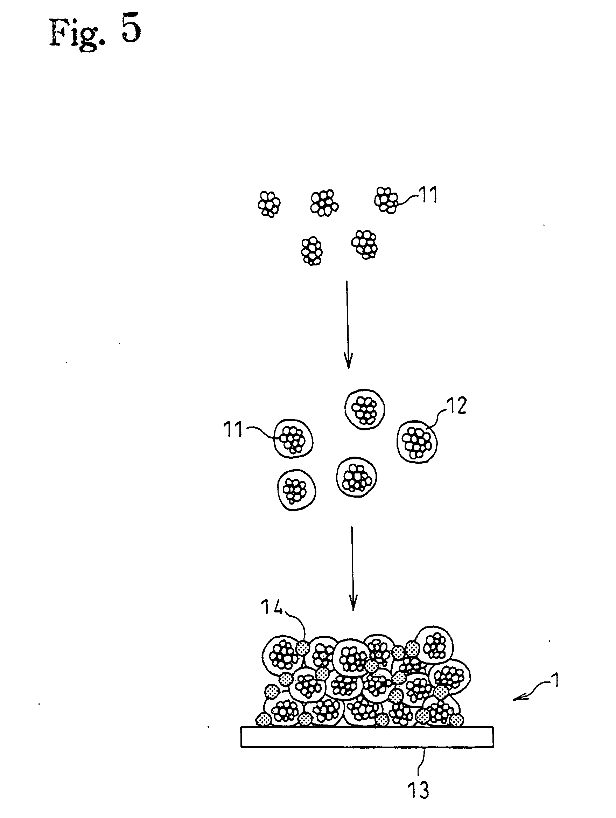

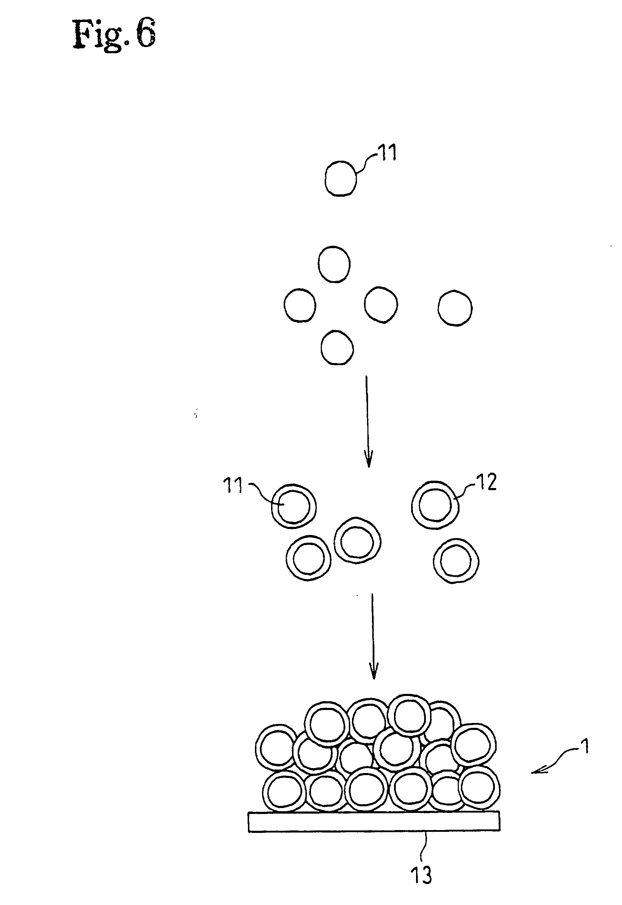

Fig. 5 shows a process for manufacturing an electrode structure 1 wherein a powdered electrode substance, i.e., a powdered electrode active substance 11 comprising particles of a compound such as LiCoO₂ is coated with an ion-conducting polymer 12, and is made to adhere to a current-collecting member 13. Likewise, Fig. 6 shows a process for manufacturing the electrode structure 1 wherein a powdered electrode substance, i.e., a powdered electrode active substance 11 having a form such as that of graphite or hard carbon is coated with the ion-conducting polymer 12, and is made to adhere to the current-collecting member 13. A powdered large surface material such as an activated carbon as the powdered large surface material such as an activated carbon as the powdered electrode substance may be coated with the ion-conducting polymer and is adhered to the current-collecting member to form an electrode structure of the electric double layer capacitor.

Fig. 5 shows the case where the electrical conductivity of the powdered electrode active substance 11 is low. The electrical conductivity in the powdered electrode active substance and between the powdered electrode active substance 11 and current-collecting member 13, is increased and the current-collecting efficiency improved by mixing with a powdered electrically-conducting substance 14. The powdered electrically-conducting substance 14 may or may not be coated with the ion-conducting polymer.

"Coating" refers to a state of contact wherein ions can easily migrate between the ion-conducting polymer 12 and the powdered electrode substance, i.e., the powdered electrode active substance 11 over their entire surfaces or the powdered large surface material over their entire surfaces. The ion-conducting polymer 12 is coated on the surface of the powdered electrode active substance 11 or the powdered large surface material so that the latter is covered by the ion-conducting polymer 12. The powdered electrode active substance 11 becomes more active the finer the particles of which it is comprised, but its activity can be suppressed to give greater stability by coating with the ion-conducting polymer 12.

If the layer of the coated ion-conducting polymer 12 is thick, conductivity decreases and current-collecting efficiency is poorer, so it is preferably thin.

The term "powdered" as used in the powdered electrode active substance 11 or the powdered electrically-conducting substance 14, or the powdered large surface material refers to a substance having a fine particle state. In some cases, it may refer to a state wherein a large number of substances having a fine particle state are agglomerated.

### (b) Secondary cell

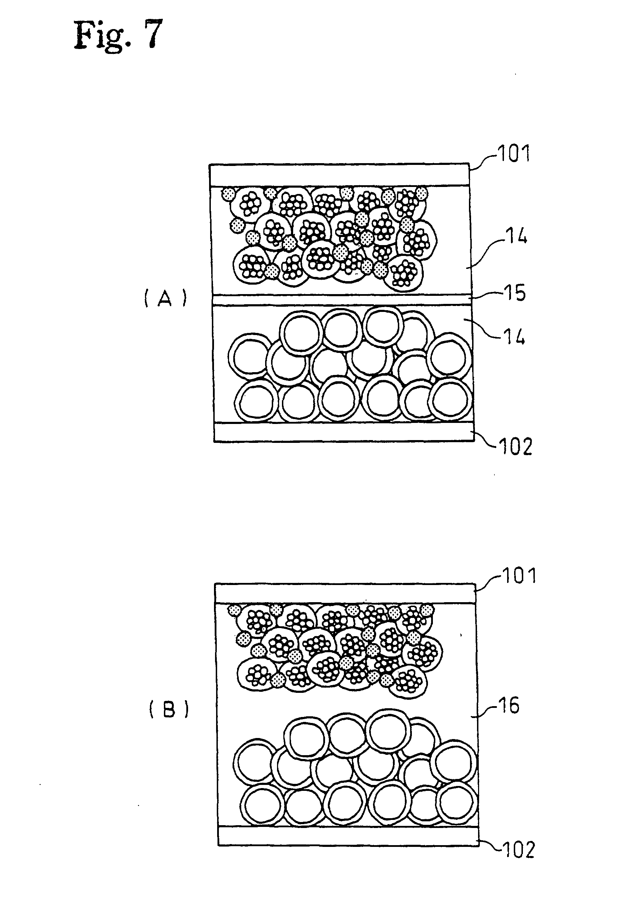

The secondary cell comprises the ion-conducting substance disposed between two types of the electrode structures 1. The secondary cell is formed by introducing a liquid such as the electrolyte 14 between an electrode structure 101 of the positive electrode and an electrode structure 102 of the negative electrode, and disposing a separator 15 between them as shown for example in Fig. 7(A). Alternatively, it is formed by disposing a solid electrolyte substance such as an ion-conducting polymer 16 between the electrode structure 101 of the positive electrode and the electrode structure 102 of the negative electrode as shown in Fig. 7(B).

### (c) Electric double layer capacitor

The electric double layer capacitor has a construction in which the powdered large surface material is used to form a pair of electrode structures and an electrolyte substance is disposed between the pair of electrode structures.

The following sections explain a method of manufacturing a powdered electrode active substance coated with an ion-conducting polymer.

### (a) Action of press-sliding mixer

When the powdered substance 11 is to be coated by the ion -conducting polymer 12, the main blade 22 in close contact with the mortar-shaped bottom surface of the container 21 of the press-sliding mixer 2 is rotated at low speed, and the mixture 10 of the ion-conducting polymer or its raw material 121 and the powdered substance 11 is introduced into the container 21. As the mixture 10 is pressed into the gap between the bottom surface of the container 21 and the main blade 22, the ion-conducting polymer or its raw material 121 is adsorbed on the surface and voids of the powdered substance 11. A cycle takes place wherein the press-slid mixture 10 temporarily rises up the mortar-shaped bottom surface from the bottom 211 of the container 21 due to the rotation of the main blade 22, then the mixture 10 introduced into the container 21 falls down relative to the risen part and is press-slid on the bottom surface of the container. In other words, due to the cycle wherein the mixture 10 is pressed and rises and falls at the same time, the mixture 10 in the container is press-slid an equivalent number of times.

More specifically, the press-sliding mixer is supported on the supporting platform 24, the container 21 is raised by the handle 241, and the device is controlled by the control panel 25.

First, the powdered substance 11 (containing an additive) is measured out, and introduced from a powdered substance input port 34. In an automated system, a measuring hopper or the like is installed above the powdered substance input port 34 for storage and measurement, and a valve 341 of the powdered substance input port is automatically opened by an input command. Simultaneously, to eliminate measurement errors from pressure rise in the container due to introduction of the powder, a discharge port 32 fitted with an aspiration filter 322 is opened alone so that only air is discharged.

Next, a valve 331 of an input port 33 for the ion-conducting polymer or its raw material is opened, and the polymer or its raw material is measured out manually or automatically and introduced into the container in the same way as the powdered substance. After introduction of the powdered substance and ion-conducting polymer or its raw material is complete, the input valves 331, 341 are closed. Further, if warm water at 30 °C is recirculated through a jacket 213 of the container to promote wetting of the powdered substance and the ion-conducting polymer or its raw material, the wetting efficiency can be improved. However, when a penetration-assisting solvent is used, processing is performed at ordinary temperature.

Next, the main motor 222 is rotated at a low speed of about 10 rpm, the mixture 10 of the ion-conducting polymer or its raw material and the powdered substance is press-slid between the bottom surface of the container 21 and the main blade 22, and the ion-conducting polymer or its raw material gradually begins to penetrate the powdered substance. At this time, the press-slid mixture 10 rises up the container at the tip of the main blade 22, the mixture 10 falls down from above the center part of the container, and a turning over action takes place in the container over its entire circumference. This is repeated regularly so that the whole mixture is uniformly press-slid. After repeating the action for approximately 1 hour, the rotation speed of the main shaft 221 is automatically or manually increased to 60 rpm, and when wetting of the mixture 10 has reached effectively half of the surface area, a vacuum pump 353 of a degassing port 35 is operated, a degassing valve 351 is opened, and degassing is performed via a filter 352 for about 1 hour. In other words, the main blade 22 press-slides the mixture 10 while degassing is performed, so wetting and penetration dispersion of the ion-conducting polymer or its raw material in the powdered substance is promoted. Here, care should be taken when a low boiling-point solvent is added to the ion-conducting polymer or its raw material to promote dispersion in the powdered substance, as the concentration or viscosity of the ion-conducting polymer or its raw material increases and dispersion becomes difficult if suction degassing is continuously performed by a high vacuum blower.

When penetration degassing has reached about 70% after degassing for approximately 1 hour, the dispersion blade is rotated at 2800 rpm to promote dispersion.

### (b) Extraction of press-slid mixture

After press-sliding, the powdered substance input port valve 341, the ion-conducting polymer input port valve 331, a discharge port valve 321 and the degassing port valve 351 are closed, the mixture 10 is pressurized by introducing an air pressure according to the viscosity of the mixture 10 from a pressurizing port 31, for example an air pressure of approximately 5kg/cm², and it is then extracted from a discharge port 36.

Alternatively, if a valve 361 of the discharge port 36 is opened alone without pressurizing the container and the main blade 22 is rotated in the reverse direction, the mixture 10 collects in the center part of the container bottom, so the mixture 10 can be discharged naturally from the discharge port 36.

### (c) Manufacture of electrode body

A solvent is added to the press-slid mixture to liquefy it to a paste which is applied to the current-collecting member, and the product is dried to evaporate the solvent. Alternatively, the solvent can be added to the mixture from the beginning and made into a paste as it is subjected to press-sliding.

The resulting substance which is press-slid and paste-like is thinly applied to the surface of the current-collecting member. After application, the solvent evaporates and dries to obtain the electrode structure. Devices which are suitable for applying the press-slid substance to the current-collecting member include, for example, a doctor knife applicator.

The applied press-slid substance may be pressed against the current-collecting member to make it adhere to it more strongly. To achieve this, a bonding device 4 may for example be used. The press-slid substance can be made to adhere to the current-collecting member by gripping the electrode structure 1 comprising the current-collecting member coated with the press-slid substance between pressure rollers 41, applying a pressure to backup rollers 42 by a pressure device 43, and rotating the rollers.

### Description of the Preferred Embodiments

Hereafter, an embodiment of a lithium ion secondary cell will be described.

### (a) Example of manufacture of positive electrode structure (Example 1)

9.1 weight parts of LiCoO₂ of average particle size 5 *µ*m which is a powdered electrode active substance, and 0.6 weight parts of graphite powder of average particle size 4 *µ*m which is a powdered electrically-conducting substance, were introduced into a press-sliding mixer, and press-slid for 20 minutes. Next, 0.546 weight parts of an ion-conducting polymer raw material (A1) and 3.5 weight parts of acetonitrile were added. The ion-conducting polymer raw material (A1) was a mixture, and its composition and mixing ratio are shown in Table 1.

### [Table 1]

The press-slid substance to which the ion-conducting polymer raw material (A1) was added, was press-slid in the press-sliding mixer for 5 hours. The press-slid substance was paste-like. 0.254 weight parts of polymeric MDI, MR-200 (NPU Co.) was added to the press-slid substance, and the mixture stirred for 5 minutes in the press-sliding mixer. The press-slid substance was removed, transferred to aluminum foil of thickness 20 *µ*m, and spread by a doctor knife applicator of 100 *µ*m gap. The resulting product was left at room temperature for 15 minutes, and then heated at 80 °C for 1 hour. The thickness of the positive electrode structure obtained was 80 *µ*m. The same effectiveness is seen when spreading by a doctor knife applicator of 200*µ*m gap.

### (b) Example of manufacture of positive electrode structure (Example 2)

9.0 weight parts of LiCoO₂ of average particle size 5 *µ*m which is a powdered electrode active substance, and 0.6 weight parts of ketjenblack and 0.2 weight parts of graphite powder of average particle size 4 *µ*m which are powdered electrically-conducting substances, were introduced into a press-sliding mixer (capacity 300cc), and press-slid for 20 minutes. Next, 1.172 weight parts of an ion-conducting polymer raw material (A1) and 3.5 weight parts of acetonitrile were added. These mixtures were press-slid for 5 hours in the press-sliding mixer. The press-slid substance was paste-like. 0.548 weight parts of polymeric MDI, MR-200 (NPU Co.), was added to the press-slid substance, and the mixture press-slid for 5 minutes. The press-slid substance was removed, transferred to aluminum foil of thickness 20 *µ*m, and spread by a doctor knife applicator of 250 *µ*m gap. The resulting product was left at room temperature for 15 minutes, and heated at 80 °C for 1 hour. The thickness of the electrode obtained was 80 *µ*m. The same effectiveness is seen by the use of 10.0 weight parts of acetonitrile and spreading a doctor knife applicator or 250 *µ*m gap.

### (c) Example of manufacture of positive electrode structure (Example 3)

9.1 weight parts of LiCoO₂ of average particle size 5 *µ*m which is a powdered electrode active substance, 0.341 weight parts of an ion-conducting polymer raw material (A1) and 3.0 weight parts of acetonitrile were introduced into a press-sliding mixer (capacity 300cc), and the mixture press-slid for 7 hours. The press-slid substance was paste-like. Next, 0.159 weight parts of polymeric MDI, MR-200 (NPU Co.) was added, and the mixture press-slid for 5 minutes. The press-slid substance was removed, transferred to aluminum foil of thickness 20 *µ*m, and spread by a doctor knife applicator of 100 *µ*m gap. The resulting product was left at room temperature for 15 minutes, and heated at 80 °C for 1 hour. The thickness of the electrode obtained was 80 *µ*m. The same effectiveness is seen when spreading by a doctor knife applicator of 200 *µ*m gap.

### (d) Example of manufacture of positive electrode structure (Example 4)

9.1 weight parts of LiCoO₂ of average particle size 5 *µ*m which is a powdered electrode active substance, and 0.6 weight parts of graphite powder of average particle size 4 *µ*m which is a powdered electrically-conducting substance, were introduced into a press-sliding mixer device (capacity 300cc), and press-slid for 20 minutes. Next, 2.0 weight parts of an ion-conducting polymer raw material (A2) and 3.0 weight parts of acetonitrile were added. The ion-conducting polymer raw material (A2) was a mixture, and its composition and mixing ratio are shown in Table 2. In the Table 2, the same result may be obtained by the use of polyethleneglycoldimethacrylate (536 molecular weight) instead of trimethylolpropanetrimethacrylate.

### [Table 2]

The press-slid substance to which the ion-conducting polymer raw material (A2) was added, was press-slid in the press-sliding mixer (capacity 300cc) for 5 hours. The press-slid substance was paste-like. A solution of 0.01 weight parts of 2,2'-azobis (2,4-dimethylvaleronitrile) and 0.5 weight parts of a (1/1) vol liquid electrolyte of ethylene carbonate (EC)/diethylene carbonate (DEC) was added to the press-slid substance, and the mixture further press-slid for 5 minutes. The press-slid substance was removed, transferred to aluminum foil of thickness 20 *µ*m, and spread by a doctor knife applicator of 100 *µ*m gap. The resulting product was left at room temperature for 15 minutes, and heated at 80 °C for 3 hours. The thickness of the electrode obtained was 80 *µ*m. The same effectiveness may be expected by the use of 0.5 weight parts of the ion-conducting polymer raw material (A2), 0.003 weight parts of 2,2'-azobis (2,4-dimethylvaleronitrile), and by spreading a doctor knife applicator of 200µm gap.

### (e) Example of manufacture of negative electrode structure (Example 5)

9.1 weight parts of graphite powder of average particle size 5 *µ*m which is a powdered electrode active substance, 0.341 weight parts of an ion-conducting polymer raw material (A1) and 3.0 weight parts of acetonitrile were introduced into a press-sliding mixer (capacity 300cc), and the mixture press-slid for 7 hours. The press-slid substance was paste-like. Next, 0.159 weight parts of polymeric MDI, MR-200 (NPU Co.) was added, and the mixture press-slid for 5 minutes. The press-slid substance was removed, transferred to copper foil of thickness 20 *µ*m, and spread by a doctor knife applicator of 100 *µ*m gap. The resulting product was left at room temperature for 15 minutes, and heated at 80°C for 1 hour. The thickness of the electrode obtained was 80 *µ*m. The same effectiveness may be expected by the use of 10.0 weight parts of the acetonitrile and spreading a doctor knife applicator of 250µm gap.

### (f) Example of manufacture of positive electrode structure (Example 6)

9.1 weight parts of graphite powder of average particle size 5 *µ*m which is a powdered electrode active substance, 0.2 weight parts of an ion-conducting polymer raw material (A2) and 3.0 weight parts of acetonitrile were introduced into a press-sliding mixer (capacity 300cc), and press-slid for 5 hours. The press-slid substance was paste-like. A solution of 0.01 weight parts of 2,2'-azobis (2,4-dimethylvaleronitrile) and 0.5 weight parts of a liquid electrolyte of ethylene carbonate (EC)/diethylene carbonate (DEC) in a volume ratio of 1:1 was added to the press-slid substance, and the mixture further press-slid for 5 minutes. The press-slid substance was removed, transferred to copper foil of thickness 20*µ* m, and spread by a doctor knife applicator of 100*µ*m gap. The resulting product was left at room temperature for 15 minutes, and heated at 80°C for 3 hours. The thickness of the electrode obtained was 80*µ*m. The same effectiveness may be expected by the use of 0.8 weight parts of the ion-conducting polymer raw material (A2), 10.0 weight parts of acetonitrile, 0.004 weight parts of 2,2'-azobis (2,4-dimethylvaleronitrile), and by spreading a doctor knife applicator of 250µm gap.

### (g) Analysis of electrode structure

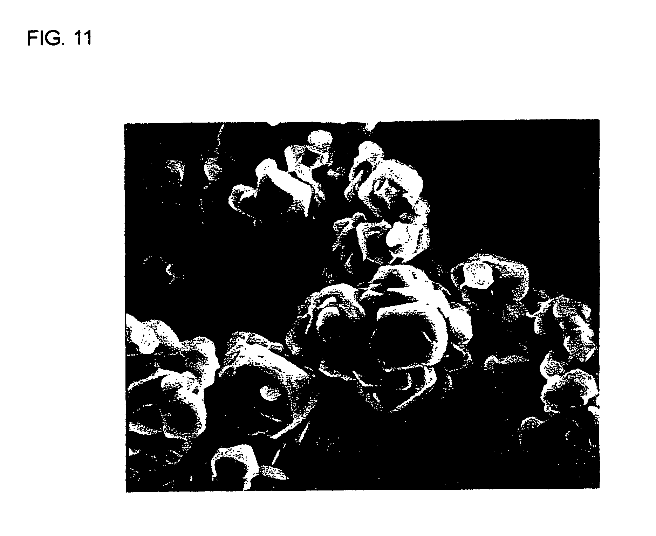

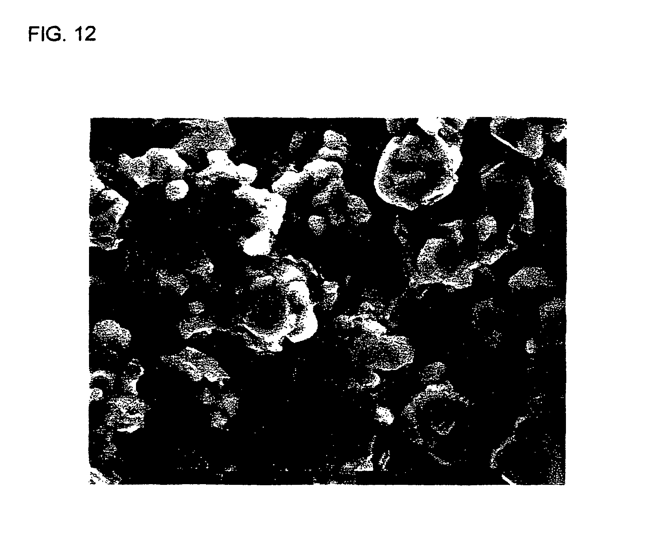

Fig. 11 shows 5000 times magnified an electron micrograph of LiCoO₂ of average particle size 5 *µ*m which had not received any processing. In Fig. 11, the corners of the compound particles of LiCoO₂ are square and clearly visible. The electron micrograph of Fig. 12 is an electron micrograph of the positive electrode structure obtained in Example 3. In Fig. 12, the corners of the compound particles of LiCoO₂ are smooth, and appear to be covered by a film. Hence, comparing with the LiCoO₂ in Fig. 11, it is evident that the LiCoO₂ particles in Fig. 12 are uniformly covered with a film of ion-conducting polymer.

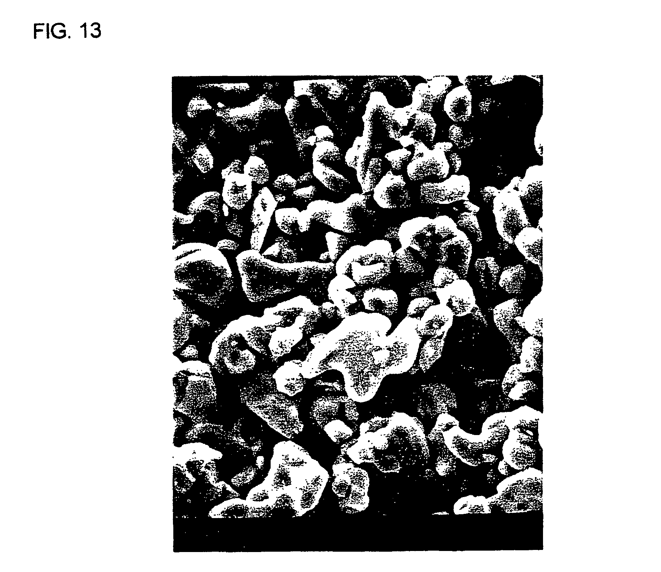

Fig. 13 shows 5000 times magnified a two-dimensional electronic image of the surface of the positive electrode structure obtained in Example 3 measured by a Shimadzu EPMA-8705 Electron Probe Micro-Analyzer. The particles of Fig. 13 have smooth corners and appear to be covered by a coating.

### (h) Comparative example of positive electrode structure (Comparative Example 1)

11.5 weight parts of n-methylpyrrolidine containing, in solution, 0.5 weight parts of polyvinylidene fluoride (PVDF) which has no ion-conducting property as a polymer binder, was mixed with 9.0 weight parts of LiCoO₂ of average particle size 5 *µ*m which is a powdered electrode active substance, and 0.8 weight parts of ketjenblack and 0.2 weight parts of graphite powder of average particle size 4 *µ*m which are powdered electrically-conducting substances, in an ordinary blade mixer. After mixing for 8 hours, the mixture was removed, transferred to copper foil of thickness 20 *µ*m, and spread by a doctor knife applicator of 100 *µ*m gap. The resulting product was then heated to evaporate n-methylpyrrolidine. The thickness of the electrode obtained was 80 *µ*m. The same result is expected by the use of 5.0 weight parts of n-methylpyrrolidine and spreading a doctor knife applicator of 200µm gap.

### (i) Comparative example of positive electrode structure (Comparative Example 2)

25.5 weight parts of n-methylpyrrolidine containing, in solution, 0.5 weight parts of polyvinylidene fluoride (PVDF) which has no ion-conducting property as a polymer binder, was mixed with 9.5 weight parts of graphite powder of average particle size 4 *µ*m which is a powdered electrically-conducting substance, in an ordinary blade mixer. After mixing for 8 hours, the mixture was removed, transferred to copper foil of thickness 20 *µ* m, and spread by a doctor knife applicator of 100 *µ*m gap. The resulting product was then heated to evaporate n-methylpyrrolidine. The thickness of the electrode obtained was 80 *µ*m. The same result is expected by the use of 10.0 weight parts of n-methylpyrrolidine containing, in solution, 1.0 weight parts of polyvinylidene fluoride (PVDF) and spreading a doctor knife applicator of 250µm gap.

### (j) Charging/discharging tests

A test lithium ion secondary cell was manufactured using the positive electrode structures manufactured in the examples and comparative examples. The positive electrode and negative electrode were both cut out to have an electrode surface area of 4cm². Completely solid polymer (all polymer), polymer gel electrolyte (polymer gel), liquid electrolyte (liquid) and a separator were sandwiched between the positive electrode and negative electrode to manufacture the test cell. The concentration of lithium salt (supporting electrolyte salt) in the respective electrolytes was arranged to be 1 M. This cell was charged at 0.3mA per 1cm² of electrolyte surface area to 4.1V, and after allowing to stand for 15 minutes, it was discharged at 0.3mA/cm² to 2.7V. Combinations for which two of these charging/discharging cycles were successfully performed, were considered to be combinations for which charging/discharging is possible, and are shown in Table 3. Table 4 shows the contents of the electrolytes listed in Table 3. The same effectiveness is expected if the thickness of the electrolyte is 20µm at P1-AP4 and 30µm at PG1-PG2.

### [Table 3]

### [Table 4]

In the charging/discharging tests of the examples and comparative examples, test cells using the positive electrode and negative electrode of this invention could be successfully charged and discharged. However, test cells using the electrodes of the comparative examples and a solid or gel electrolyte could not be charged/discharged, although test cells using liquid electrolytes and gel electrolytes could be charged/discharged.

An embodiment of the electric double layer capacitor is explained next. Embodiment of electrode structure of capacitor

An electrode structure for capacitor is manufactured by adding the carbon black as the powdered conducting substance in a phenol activated carbon (manufactured by Kansai Kagaku Corporation) as the powdered electrode substance; dry-mixing with a mixing container; adding the polymer A1 as the binder to be mixed; adding NMP (N methylpyrolidone) as the solvent to be mixed; applying on the current-collecting member by the doctor knife applicator; and drying. The thickness of the electrode is 75µ.

### Industrial Field of Application

This invention makes it possible to obtain a device wherein a powdered substance is efficiently coated by an ion-conducting polymer.

This invention makes it possible to obtain a method whereby a powdered substance is efficiently coated by an ion- conducting polymer.

This invention further makes it possible to obtain a powdered substance coated by an ion-conducting polymer.

### TABLES

**[Table 1]**

| Ion-conducting polymer raw material (A1) | |
|---|---|
| Substance | Mixing ratio (weight parts) |
| Trifunctional (propylene glycol/ethylene glycol) random copolymer, SANNIX FA-103 (PO/EO=2/8, Mw=3,282, Sanyo Chemical Industries, Ltd.) | 8.36 |
| Trifunctional polyol, 1,4-butadiol | 0.34 |
| Ethylene cyanohydrin | 1.27 |
| Reaction catalyst NC-IM (Sankyo Air Products K.K.) | 0.03 |
| Total | 10 |

**[Table 2]**

| Ion-conducting polymer raw material (A2) | |
|---|---|
| Substance | Mixing ratio (weight parts) |
| Cyanoethylated/dihydroxypropylated polyvinyl alcohol | 0.625 |
| Methoxypolyethyleneglycol methacrylate (mol. wt. 468) | 3.125 |
| Trimethylolpropanetri methacrylate | 6.25 |
| Total | 10 |

**[Table 3]**

| Charging/discharging test results | | | | |
|---|---|---|---|---|
| No | Positive electrode | Negative electrode | Electrolyte | Charging/discharging test result |
| 1 | Example 1 | Example 5 | AP1 | Possible |
| 2 | Example 1 | Example 5 | AP2 | Possible |
| 3 | Example 1 | Example 5 | AP3 | Possible |
| 4 | Example 1 | Example 5 | AP4 | Possible |
| 5 | Example 1 | Example 5 | PG1 | Possible |
| 6 | Example 1 | Example 5 | PG2 | Possible |
| 7 | Example 1 | Example 5 | L1 | Possible |
| 8 | Example 2 | Example 5 | AP3 | Possible |
| 9 | Example 2 | Example 6 | PG2 | Possible |
| 10 | Example 4 | Example 5 | AP3 | Possible |
| 11 | Example 4 | Example 6 | PG2 | Possible |
| 12 | Comparative example 1 | Comparative example 2 | AP1 | Charging/discharging impossible |
| 13 | Comparative example 1 | Comparative example 2 | AP2 | Charging/discharging impossible |
| 14 | Comparative example 1 | Comparative example 2 | AP3 | Charging/discharging impossible |
| 15 | Comparative example 1 | Comparative example 2 | AP4 | Charging/discharging impossible |
| 16 | Comparative example 1 | Comparative example 2 | PG1 | Charging/discharging impossible |
| 17 | Comparative example 1 | Comparative example 2 | PG2 | Charging/discharging impossible |
| 18 | Comparative example 1 | Comparative example 2 | L1 | Possible |

**[Table 4]**

| Electrolyte used in test | | | |
|---|---|---|---|
| Symbol | Type | Composition | Thicknes s |
| AP1 | All polymer | Cyanoethylated/dihydroxypropylated cellulose (e.g. Japanese Patent Application Laid-Open No. 8-225626) | 100 µm |
| AP2 | All polymer | Cyanoethylated/dihydroxypropylated cellulose and methacryl polymer 3D cross-linked structure (e.g. Japanese Patent Application Laid-Open No. 8-225626) | 100 µm |
| AP3 | All polymer | High viscosity polyurethane electrolyte (e.g. Japanese Patent Application No. 11-78085) | 100 µm |
| AP4 | All polymer | Cyanoethylated/dihydroxypropylated polyvinyl alcohol (e.g. Japanese Patent Application No. 11-78086) | 100 *µ*m |
| PG1 | Polymer gel | Cyanoethylated/dihydroxypropylated polyvinyl alcohol and methacryl polymer 3D cross-linked structure containing 50% ethylene carbonate (EC)/diethylene carbonate (DEC) = (1/1) vol liquid electrolyte (e.g. Japanese Patent Application No. 11-78087) | 100 µm |
| PG2 | Polymer gel | High viscosity polyurethane electrolyte containing 50% ethylene carbonate (EC)/diethylene carbonate (DEC) = (1/1) vol liquid electrolyte (e.g. Japanese Patent Application No. 11-78085) | 100 µm |
| L1 | Liquid | Impregnation of ethylene carbonate (EC)/diethylene carbonate (DEC) = (1/1) vol solution in polyethylene separator | 23 µm |

## Claims

1. A press-sliding mixer which processes a mixture of an ion-conducting polymer or ion-conducting polymer raw material and a powdered substance so as to coat the powdered substance with the ion-conducting polymer, comprising a container having a bottom surface for containing the mixture and a main blade which displaces relative to the bottom surface, wherein the mixture is press-slid between the bottom surface and the main blade.

2. A press-sliding mixer as defined in Claim 1, wherein there is an effectively constant gap between the main blade and the bottom surface.

3. A press-sliding mixer as defined in Claim 1, further comprises a tip of said main blade for removing the mixture adhered to the lateral surface of said container.

4. A press-sliding mixer as defined in Claim 3, wherein said tip of main blade is disposed at the position facing said lateral surface of container of said main blade.

5. A press-sliding mixer as defined in Claim 1, wherein said main blade is disk-shaped.

6. A press-sliding mixer as defined in Claim 5, wherein said disk-shaped main blade has at least one through hole or notched groove.

7. A press-sliding mixer as defined in Claim 1, wherein said main blade is a wide blade.

8. A press-sliding mixer as defined in Claim 1, wherein a rotational direction of said main blade is repeatedly reversed.

9. A press-sliding mixer as defined in Claim 1, wherein the bottom surface has a bottom part with a low part and a slope which increases from the bottom part to a circumferential part, and the main blade is disposed above the bottom part and rotates around the bottom part as center.

10. A press-sliding mixer as defined in Claim 1, wherein a surface in the motion direction of the main blade is formed at an acute angle to the bottom surface of the container.

11. A press-sliding mixer as defined in Claim 1, wherein a surface opposite to the motion direction of the main blade is formed effectively perpendicular to or at an obtuse angle to the bottom surface of the container.

12. A press-sliding mixer as defined in Claim 1, comprising a dispersion blade in the container.

13. A coating method wherein a mixture of an ion-conducting polymer or ion-conducting polymer raw material and a powdered substance is press-slid so as to make the ion-conducting polymer or ion-conducting polymer raw material adhere to a powdered substance.

14. A coating method for coating a powdered substance with an ion-conducting polymer as defined in Claim 13, wherein a solvent is added to a mixture.

15. A coating method for coating a powdered substance with an ion-conducting polymer as defined in Claim 13, wherein the mixture is contained in a container and the mixture is press-slid by a main blade against the bottom surface of the container.

16. A coating method for coating a powdered substance with an ion-conducting polymer as defined in Claim 13, wherein the mixture is contained in a container, the mixture is press-slid by a main blade against the bottom surface of the container, and the mixture is dispersed by a dispersion blade.

17. A powdered substance coated with an ion-conducting polymer obtained by press-sliding a mixture of an ion-conducting polymer or ion-conducting polymer raw material and a powdered substance.

18. A powdered substance coated with an ion-conducting polymer as defined in Claim 17, wherein the powdered substance is a powdered electrode active substance or a powdered large surface material.

19. A powdered substance formed by coating a powdered electrode active substance used in an electrode structure of a secondary cell with an ion-conducting polymer.

20. A powdered substance formed by coating a powdered electrode active substance used in an electrode structure of an electric double layer capacitor.
